# EUROPEAN PATENT APPLICATION

(11) **EP 4 647 835 A1**
(43) Date of publication of application: **12.11.2025**
(21) Application number: 25174797.8
(22) Date of filing: 07.05.2025
(51) Int. Cl.: G03B 21/20, G02B 27/10, H04N 9/31

(54) **ILLUMINATION SYSTEM AND PROJECTION DEVICE**

(30) Priority: 08.05.2024 CN 202410562219
(71) Applicant: Coretronic Corporation, Hsin-Chu 300 (TW)
(72) Inventor: WENG, Ming-Tsung, 300 Hsin-Chu (TW); CHEN, Kuan-Lun, 300 Hsin-Chu (TW)
(74) Representative: Ter Meer Steinmeister & Partner

(57) **Abstract**

An illumination system includes a first light source module, a second light source module, a third light source module, a first optical element, a second optical element, and a third optical element. The first light source module provides only a first color beam. The second light source module provides only a second color beam and a third color beam. The third light source module provides the third color beam. The first to the third optical elements are disposed on transmission paths of the first to the third color beams. The first and second light source modules are respectively located on two opposite sides of the first optical element and the second optical element. The second optical element is located between the first and third optical element. In this way, brightness of the illumination system is improved, and uniformity of three colors in the illumination beam is improved.

## Description

This application claims the priority benefit of China application serial no. 202410562219.4, filed on May 8, 2024.

### BACKGROUND

### Technical Field

The disclosure relates to an optical system and an electronic device, and more particularly, to an illumination system and a projection device.

### Description of Related Art

A projection device is a display device for generating large-size images, and has been continuously advancing with the evolution and innovation of technology. The imaging principle of a projection device is to convert an illumination beam generated by an illumination system into an image beam via a light valve, and then project the image beam onto a projection target (e.g., a screen or a wall) through a projection lens to form a projection image.

Furthermore, in response to market demands for brightness, color saturation, service life, non-toxicity, and environmental friendliness, illumination systems have evolved from ultra-high-performance lamps (UHP lamps) to light-emitting diodes (LEDs), and now to the most advanced laser diode (LD) light sources. However, in the current architecture, light sources of different colors are formed on different modules, each paired with heat dissipation modules of different sizes or types to dissipate heat and improve light-emitting efficiency. Nevertheless, this approach results in an overly large illumination system, and the combined light beams of various colors are not easily aligned along the same optical path, leading to uneven color distribution in the projection image.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

### SUMMARY

The disclosure provides an illumination system and a projection device, which may improve brightness of the illumination system and improve uniformity of an illumination beam.

Other objectives and advantages of the disclosure may be further understood from the technical features disclosed herein.

The object is solved by the features of the independent claims. Preferred embodiments are given in the dependent claims.

In order to achieve one, a part, or all of the above objectives or other objectives, the disclosure provides an illumination system wherein the illumination system provides an illumination beam and comprises a first light source module, a second light source module, a third light source module, a first optical element, a second optical element, and a third optical element, wherein: the first light source module provides only a first color beam; the second light source module provides only a second color beam and a third color beam; the third light source module provides the third color beam; the first optical element, the second optical element, and the third optical element are all disposed on the transmission paths of the first color beam, the second color beam, and the third color beam, and the first light source module and the second light source module are respectively located on opposite sides of the first optical element and the second optical element, and the second optical element is disposed between the first optical element and the third optical element.

In order to achieve one, a part, or all of the above objectives or other objectives, the disclosure further provides a projection device, comprising an illumination system, a light valve, and a projection lens, wherein the illumination system provides an illumination beam, and the illumination system comprises a first light source module, a second light source module, a third light source module, a first optical element, a second optical element, and a third optical element, wherein the first light source module provides only a first color beam; the second light source module provides only a second color beam and a third color beam; the third light source module provides the third color beam; the first optical element, the second optical element, and the third optical element are all disposed on the transmission paths of the first color beam, the second color beam, and the third color beam, and the first light source module and the second light source module are respectively located on opposite sides of the first optical element and the second optical element, and the second optical element is disposed between the first optical element and the third optical element; the light valve is disposed on a transmission path of the illumination beam to convert the illumination beam into an image beam; and the projection lens is disposed on a transmission path of the image beam to project the image beam out of the projection device.

In one or more embodiments, an extending direction of a substrate of the first light source module may be perpendicular to an extending direction of a substrate of the second light source module.

In one or more embodiments, the extending direction of the substrate of the second light source module may be parallel to an extending direction of a substrate of the third light source module.

In one or more embodiments, the first light source module may comprise at least one first red laser diode, at least one second red laser diode, at least one third red laser diode, and at least one fourth red laser diode arranged linearly.

In one or more embodiments, the second light source module may comprise at least one first blue laser diode, at least one second blue laser diode, at least one first green laser diode, and at least one second green laser diode arranged linearly.

In one or more embodiments, the third light source module may comprise at least one first green laser diode and at least one second green laser diode arranged linearly.

In one or more embodiments, the first optical element, the second optical element, and the third optical element may be configured to allow the first color beam to pass through.

In one or more embodiments, the first optical element may be configured to allow the first color beam to pass through and to reflect the second color beam.

In one or more embodiments, the first optical element may be further configured to reflect the third color beam.

In one or more embodiments, the second optical element may be configured to allow the first color beam to pass through, to reflect a portion of the second color beam and allow another portion of the second color beam to pass through, and to reflect the third color beam.

In one or more embodiments, the second optical element may be configured to allow the first color beam to pass through, to reflect a portion of the second color beam and allow another portion of the second color beam to pass through, and to allow the third color beam to pass through.

In one or more embodiments, the third optical element may comprise an optical region configured to allow the first color beam and the second color beam to pass through, and to reflect the third color beam.

In one or more embodiments, the third optical element may further comprise two transmission regions.

In one or more embodiments, the optical region may be connected between the two transmission regions, the two transmission regions being configured to allow light beams to pass through.

In one or more embodiments, the illumination system may further comprise a condensing element disposed on the transmission paths of the first color beam, the second color beam, and the third color beam.

In one or more embodiments, the third optical element may be located between the condensing element and the second optical element.

In one or more embodiments, the first color beam, the second color beam, and the third color beam may form a plurality of light spots on the condensing element.

In one or more embodiments, the plurality of light spots may be symmetrical about a center of the condensing element.

In one or more embodiments, the first color beam provided by the first light source module may comprise a first red beam, a second red beam, a third red beam, and a fourth red beam.

In one or more embodiments, the first red beam may be transmitted to the first optical element and the condensing element along a first path.

In one or more embodiments, the second red beam may be transmitted to the first optical element, the third optical element, and the condensing element along a second path.

In one or more embodiments, the third red beam may be transmitted to the first optical element, the second optical element, and the condensing element along a third path.

In one or more embodiments, the fourth red beam may be transmitted to the first optical element, the second optical element, and the condensing element along a fourth path.

In one or more embodiments, the second color beam provided by the second light source module may comprise a first blue beam and a second blue beam.

In one or more embodiments, the first blue beam may be transmitted to the first optical element, and may be reflected by the first optical element along the third path to the second optical element.

In one or more embodiments, the first blue beam may be divided by the second optical element into a first portion and a second portion.

In one or more embodiments, the first portion of the first blue beam may be transmitted along the third path to the condensing element.

In one or more embodiments, the second portion of the first blue beam may be transmitted to the first optical element, reflected by the first optical element along the first path to the third optical element and the condensing element.

In one or more embodiments, the second blue beam may be transmitted to the first optical element, and may be reflected by the first optical element along the fourth path to the second optical element, and may be divided by the second optical element into a first portion and a second portion.

In one or more embodiments, the first portion of the second blue beam may be transmitted along the fourth path to the condensing element.

In one or more embodiments, the second portion of the second blue beam may be transmitted to the first optical element, reflected by the first optical element along the second path to the third optical element and the condensing element.

In one or more embodiments, the third color beam provided by the second light source module may comprise a first green beam and a second green beam.

In one or more embodiments, the first green beam may be transmitted to the second optical element and reflected by the second optical element along the third path to the condensing element.

In one or more embodiments, the second green beam may be transmitted to the second optical element and reflected by the second optical element along the fourth path to the condensing element.

In one or more embodiments, the third color beam provided by the third light source module may comprise a third green beam and a fourth green beam.

In one or more embodiments, the third green beam may be transmitted to the third optical element and reflected by the third optical element along the second path to the condensing element.

In one or more embodiments, the fourth green beam may be transmitted to the third optical element and reflected by the third optical element along the first path to the condensing element.

In one or more embodiments, the second color beam provided by the second light source module may comprise a first blue beam and a second blue beam.

In one or more embodiments, the first blue beam may be transmitted to the first optical element, reflected by the first optical element along the third path to the second optical element, and divided into a first portion and a second portion by the second optical element.

In one or more embodiments, the first portion of the first blue beam may be transmitted along the third path to the third optical element and the condensing element.

In one or more embodiments, the second portion of the first blue beam may be transmitted to the first optical element and may be reflected by the first optical element along the first path to the condensing element.

In one or more embodiments, the second blue beam may be transmitted to the second optical element and may be divided by the second optical element into a first portion and a second portion.

In one or more embodiments, the first portion of the second blue beam may be transmitted along the fourth path to the condensing element.

In one or more embodiments, the second portion of the second blue beam may be transmitted to the first optical element and is reflected by the first optical element along the second path to the third optical element and the condensing element.

In one or more embodiments, the third color beam provided by the second light source module may comprise a first green beam and a second green beam.

In one or more embodiments, the first green beam may pass through the second optical element to the first optical element and may be reflected by the first optical element along the first path to the condensing element.

In one or more embodiments, the second green beam may be transmitted to the first optical element and may be reflected by the first optical element along the fourth path to the second optical element and the condensing element.

In one or more embodiments, the third color beam provided by the third light source module may comprise a third green beam and a fourth green beam.

In one or more embodiments, the third green beam may be transmitted to the third optical element and may be reflected by the third optical element along the third path to the condensing element.

In one or more embodiments, the fourth green beam may be transmitted to the third optical element and may be reflected by the third optical element along the second path to the condensing element.

In one or more embodiments, the first path to the fourth path may be parallel to each other and do not overlap.

Based on the above, the embodiments of the disclosure have at least one of the following advantages or functions. In the illumination system and the projection device of the disclosure, the first light source module provides only the first color beam, the second light source module provides only the second color beam and the third color beam, and the third light source module provides the third color beam. The first color beam, the second color beam, and the third color beams are respectively and evenly transmitted to different positions along different paths through the configuration of the first light source module, the second light source module, the third light source module, the first optical element, the second optical element, and the third optical element. As a result, the light spots formed by the first color beam, the second color beam, and the third color beam may be symmetrically and evenly distributed. Furthermore, by adding the third light source module to provide the additional third color beam, the brightness of the illumination system is further improved, and each of the first path to the fourth path may include the red, blue, and green light, thereby providing uniform red, blue, and green illumination beams.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic view of a projection device according to an embodiment of the disclosure.
FIG. 2 is a schematic view of an illumination system according to an embodiment of the disclosure.
FIG. 3 is a schematic view of a condensing element in the illumination system of FIG. 2.
FIG. 4 is a schematic view of an illumination system of another embodiment of the disclosure.

### DETAILED DESCRIPTION OF DISCLOSED EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

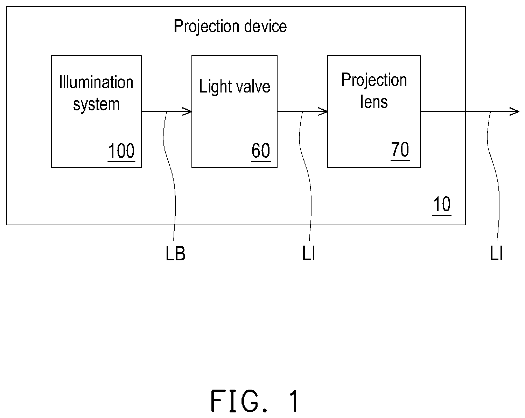

FIG. 1 is a schematic view of a projection device according to an embodiment of the disclosure. Referring to FIG. 1, in this embodiment, a projection device 10 is provided, which includes an illumination system 100, a light valve 60, and a projection lens 70. The illumination system 100 is configured to provide an illumination beam LB. The light valve 60 is disposed on a transmission path of the illumination beam LB and is configured to convert the illumination beam LB into an image beam LI. The projection lens 70 is disposed on a transmission path of the image beam LI and is configured to project the image beam LI out of the projection device 10 to a projection target (not shown), such as a screen or a wall.

The illumination system 100 is configured to provide the illumination beam LB. For example, in this embodiment, the illumination system 100 includes multiple light-emitting elements, a wavelength conversion element, a light homogenizing element, a filter element, and multiple light splitting and combining elements to provide light of different wavelengths for forming the image beam LI. The light-emitting elements may be, for example, light-emitting diodes (LEDs) or laser diodes (LDs). Detailed implementations will be described in subsequent paragraphs.

The light valve 60 may be, for example, a reflective light modulator such as a liquid crystal on silicon panel (LCoS panel) or a digital micro-mirror device (DMD). In some embodiments, the light valve 60 may also be a transmissive light modulator such as a transparent liquid crystal panel, an electro-optical modulator, a magneto-optic modulator, or an acousto-optic modulator (AOM). The disclosure provides imposes no limitation on the type or form of the light valve 60. Detailed procedures and implementations for the light valve 60 to convert the illumination beam LB into the image beam LI may be readily obtained by those skilled in the art with sufficient teaching and suggestion, and therefore are not repeated herein.

The projection lens 70 may include a combination of one or more optical lenses with diopter, such as various combinations of non-planar lenses including biconcave lenses, biconvex lenses, concave-convex lenses, convex-concave lenses, plane-convex lenses, and plane-concave lenses. In some embodiments, the projection lens 70 may further include planar optical lenses to project the image beam LI from the light valve 60 to the projection target in a reflective manner. The disclosure imposes no limitation on the type or form of the projection lens 70.

It should be noted that the X, Y, and Z axes are indicated in each of the drawings to clarify the viewing angles of the drawings.

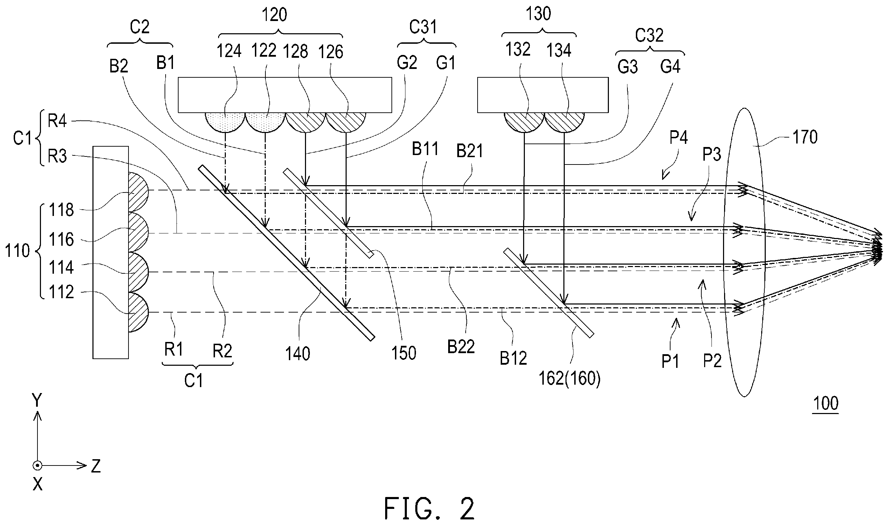

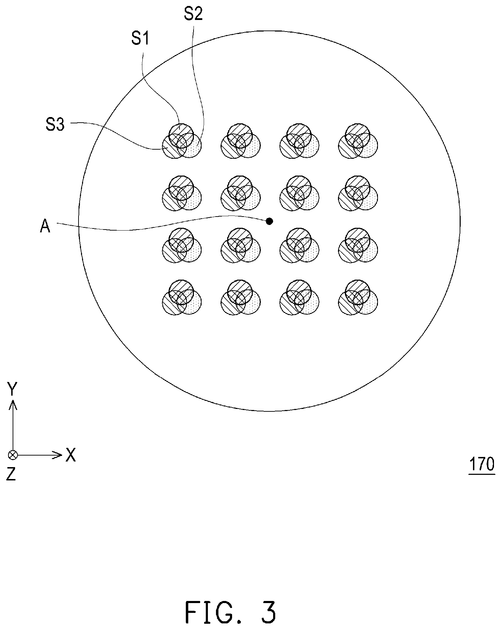

FIG. 2 is a schematic view of an illumination system according to an embodiment of the disclosure. FIG. 3 is a schematic view of a condensing element in the illumination system of FIG. 2. The illumination system 100 shown in FIG. 2 may be applied to the projection device 10 shown in FIG. 1. Accordingly, the projection device 10 in FIG. 1 is taken as an example for the following description. Referring to FIG. 2, the illumination system 100 includes a first light source module 110, a second light source module 120, a third light source module 130, a first optical element 140, a second optical element 150, and a third optical element 160. In this embodiment, the illumination system 100 further includes a condensing element 170, such as a focusing lens, which is disposed on transmission paths of the light beams provided by the first light source module 110, the second light source module 120, and the third light source module 130 to condense the light beams and provide them to subsequent optical elements, such as a light homogenizing element (not shown).

In detail, the first light source module 110 provides only a first color beam C1. The second light source module 120 provides only a second color beam C2 and a third color beam C31. The third light source module 130 provides a third color beam C32. The condensing element 170 is disposed on the transmission paths of the first color beam C1, the second color beam C2, and the third color beams C31 and C32. For example, in this embodiment, the first color beam C1 is a red beam, the second color beam C2 is a blue beam, and the third color beams C31 and C32 are green beams. Accordingly, the first color beam C1 provided by the first light source module 110 further includes a first red beam R1, a second red beam R2, a third red beam R3, and a fourth red beam R4. The second color beam C2 provided by the second light source module 120 further includes a first blue beam B1 and a second blue beam B2. The third color beam C31 provided by the second light source module 120 further includes a first green beam G1 and a second green beam G2. The third color beam C32 provided by the third light source module 130 further includes a third green beam G3 and a fourth green beam G4. In this embodiment, the first color beams C1 are of the same color, the second color beams C2 are of the same color, and the third color beams C31 and C32 are of the same color. However, in other embodiments, the light beams of the same color may have slightly different wavelength ranges (for example, a wavelength of the first red beam R1 is 625 nm, and a wavelength of the second red beam R2 is 610 nm), and the disclosure is not limited thereto.

In this embodiment, an extending direction of a substrate of the first light source module 110 is perpendicular to an extending direction of a substrate of the second light source module 120, and the extending direction of the substrate of the second light source module 120 is parallel to an extending direction of a substrate of the third light source module 130. However, in other embodiments, the extending direction of the substrate of the second light source module 120 and the extending direction of the substrate of the third light source module 130 may be configured to be non-parallel, and the disclosure is not limited thereto. It is worth mentioning that the first red beam R1, the second red beam R2, the third red beam R3, and the fourth red beam R4 provided by the first light source module 110 are linearly arranged; the first blue beam B1, the second blue beam B2, the first green beam G1, and the second green beam G2 provided by the second light source module 120 are linearly arranged; and the third green beam G3 and the fourth green beam G4 provided by the third light source module 130 are also linearly arranged. In other words, the first light source module 110 comprises at least one first red laser diode 112, at least one second red laser diode 114, at least one third red laser diode 116, and at least one fourth red laser diode 118, which are linearly arranged. The second light source module 120 includes at least one first blue laser diode 122, at least one second blue laser diode 124, at least one first green laser diode 126, and at least one second green laser diode 128, which are linearly arranged. The third light source module 130 comprises at least one first green laser diode 132 and at least one second green laser diode 134, which are linearly arranged. Taking the beam landing points shown in FIG. 3 as an example, in this embodiment, there are four first red laser diodes 112, four second red laser diodes 114, four third red laser diodes 116, and four fourth red laser diodes 118 in the first light source module 110, which is a total of 16 red laser diodes. The first red laser diode 112 is configured to provide the first red beam R1, the second red laser diode 114 is configured to provide the second red beam R2, the third red laser diode 116 is configured to provide the third red beam R3, and the fourth red laser diode 118 is configured to provide the fourth red beam R4. Likewise, there are four first blue laser diodes 122, four second blue laser diodes 124, four first green laser diodes 126, and four second green laser diodes 128 in the second light source module 120, which is a total of 16 laser diodes. The first blue laser diode 122 is configured to provide the first blue beam B1, the second blue laser diode 124 is configured to provide the second blue beam B2, the first green laser diode 126 is configured to provide the first green beam G1, and the second green laser diode 128 is configured to provide the second green beam G2. In the third light source module 130, there are four first green laser diodes 132 and four second green laser diodes 134, which is a total of 8 laser diodes. The first green laser diode 132 is configured to provide the third green beam G3, and the second green laser diode 134 is configured to provide the fourth green beam G4. However, in other embodiments, there may be any number of laser diodes with the same color beam, and the disclosure is not limited thereto.

The first optical element 140, the second optical element 150, and the third optical element 160 are all disposed on the transmission paths of the first color beam C1, the second color beam C2, and the third color beams C31 and C32. The first light source module 110 and the second light source module 120 are respectively located on opposite sides of the first optical element 140 and the second optical element 150. Specifically, the first light source module 110 faces the condensing element 170 and is located on one side of the first optical element 140 and the second optical element 150, while the second light source module 120 does not face the condensing element 170 and is located on the other side. The third optical element 160 is located between the condensing element 170 and the second optical element 150. The second optical element 150 is located between the first optical element 140 and the third optical element 160. Therefore, by disposing the first optical element 140, the second optical element 150, and the third optical element 160, light combination may be performed on the first color beam C1, the second color beam C2, and the third color beams C31 and C32 to obtain the illumination beam LB (as shown in FIG. 1). The obtained illumination beam LB is an illumination beam with a uniform color distribution (as further illustrated in FIG. 3).

The first optical element 140, the second optical element 150, and the third optical element 160 are all configured to allow the first color beam C1 to pass through. Specifically, the first optical element 140 is configured to allow the first color beam C1 to pass through and to reflect the second color beam C2. For example, the first optical element 140 may be a dichroic mirror with blue reflector (DMB), which is configured to reflect blue light and allow red light and other wavelengths to pass through.

The second optical element 150 is configured to allow the first color beam C1 to pass through, to reflect a portion of the second color beam C2 and allow another portion of the second color beam C2 to pass through, and to reflect the third color beam C31. In this embodiment, the second optical element 150 reflects 50% of the second color beam C2 and allows the other 50% to pass through. For example, the second optical element 150 may be a combination of a half mirror with blue (HMB) and a dichroic mirror with green reflector (DMG), which is configured to half-transmit and half-reflect blue light, reflect green light, and allow red light to pass through.

The third optical element 160 includes an optical area 162, which is configured to allow the first color beam C1 and the second color beam C2 to pass through, and to reflect the third color beam C32. For example, the third optical element 160 may be a dichroic mirror with green reflector (DMG), which is configured to reflect green light and allow red light and blue light to pass through.

Therefore, with respect to the paths of the respective beams, the first color beam C1, the second color beam C2, and the third color beams C31 and C32 are transmitted evenly to different positions of the condensing element 170 along a first path P1, a second path P2, a third path P3, and a fourth path P4, respectively, by the configuration of the first light source module 110, the second light source module 120, the third light source module 130, the first optical element 140, the second optical element 150, and the third optical element 160. The first path P1 to the fourth path P4 are parallel to each other and do not overlap. In this embodiment, the first optical element 140 is disposed on the transmission paths of the first path P1 to the fourth path P4, the second optical element 150 is disposed on the transmission paths of the third path P3 and the fourth path P4, and the optical area 162 of the third optical element 160 is disposed on the transmission paths of the first path P1 and the second path P2.

Specifically, in this embodiment, the first red beam R1 provided by the first light source module 110 is transmitted from the first red laser diode 112 along the first path P1, passes through the first optical element 140 and the optical area 162 of the third optical element 160, and reaches the condensing element 170. The second red beam R2 is transmitted from the second red laser diode 114 along the second path P2, passes through the first optical element 140 and the optical area 162 of the third optical element 160, and reaches the condensing element 170. The third red beam R3 is transmitted from the third red laser diode 116 along the third path P3, passes through the first optical element 140 and the second optical element 150, and reaches the condensing element 170. The fourth red beam R4 is transmitted from the fourth red laser diode 118 along the fourth path P4, passes through the first optical element 140 and the second optical element 150, and reaches the condensing element 170.

In addition, the first blue beam B1 provided by the second light source module 120 is transmitted from the first blue laser diode 122 to the first optical element 140, and is reflected by the first optical element 140 along the third path P3 to the second optical element 150. The first blue beam B1 is divided by the second optical element 150 into a first portion B11 and a second portion B12. The first portion B11 is transmitted along the third path P3 to the condensing element 170. The second portion B12 is transmitted to the first optical element 140, reflected by the first optical element 140 along the first path P1, passes through the optical area 162 of the third optical element 160, and is transmitted to the condensing element 170. The second blue beam B2 provided by the second light source module 120 is transmitted from the second blue laser diode 124 to the first optical element 140, and is reflected by the first optical element 140 along the fourth path P4 to the second optical element 150. The second blue beam B2 is divided by the second optical element 150 into a first portion B21 and a second portion B22. The first portion B21 is transmitted along the fourth path P4 to the condensing element 170. The second portion B22 is transmitted to the first optical element 140, reflected by the first optical element 140 along the second path P2, passes through the optical area 162 of the third optical element 160, and is transmitted to the condensing element 170. The first green beam G1 provided by the second light source module 120 is transmitted from the first green laser diode 126 to the second optical element 150, and is reflected by the second optical element 150 along the third path P3 to the condensing element 170. The second green beam G2 provided by the second light source module 120 is transmitted from the second green laser diode 128 to the second optical element 150, and is reflected by the second optical element 150 along the fourth path P4 to the condensing element 170.

In addition, the third green beam G3 provided by the third light source module 130 is transmitted from the first green laser diode 132 to the optical area 162 of the third optical element 160, and is reflected by the optical area 162 of the third optical element 160 along the second path P2 to the condensing element 170. The fourth green beam G4 provided by the third light source module 130 is transmitted from the second green laser diode 134 to the optical area 162 of the third optical element 160, and is reflected by the optical area 162 along the first path P1 to the condensing element 170.

Continuing to refer to FIGs. 1 to 3, since the first color beam C1, the second color beam C2, and the third color beams C31 and C32 are respectively and evenly transmitted to different positions of the condensing element 170 along the first path P1, the second path P2, the third path P3, and the fourth path P4, multiple light spots S1, S2, and S3 may be formed by the first color beam C1, the second color beam C2, and the third color beams C31 and C32 on the condensing element 170, and the light spots S1, S2, and S3 are symmetrical with respect to a center A of the condensing element 170. Specifically, the light spots S1, S2, and S3 are transmitted to different positions along the first path P1 to the fourth path P4 and are overlapped. It is worth mentioning that in this embodiment, since the third light source module 130 is added to provide the third green beam G3 and the fourth green beam G4, brightness of the illumination system 100 may be further improved, and each of the first path P1 to the fourth path P4 may include the red, blue, and green light, thereby providing uniform red, blue, and green illumination beams LB. The illumination beam LB includes at least one of the red light, the blue light, and the green light.

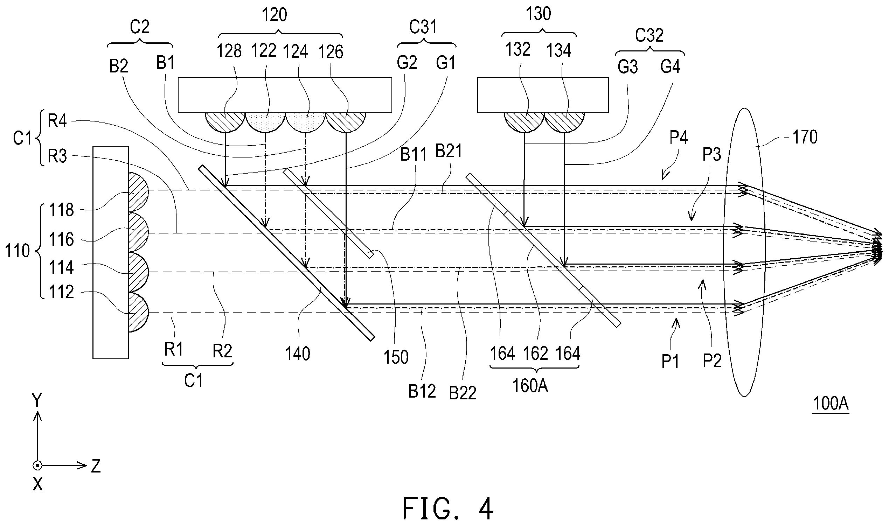

FIG. 4 is a schematic view of an illumination system according to another embodiment of the disclosure. Referring to FIG. 4, the illumination system 100A in this embodiment is similar to the illumination system 100 shown in FIG. 2. The difference is that, in this embodiment, the configuration order of the at least one first blue laser diode 122, at least one second blue laser diode 124, at least one first green laser diode 126, and at least one second green laser diode 128 in the second light source module 120 is different. In addition, the first optical element 140 is further configured to reflect the third color beam C31 (i.e., the first green beam G1 and the second green beam G2) from the second light source module 120, and the second optical element 150 is configured to allow the third color beam C31 to pass through. The optical area 162 of a third optical element 160A is changed to be disposed on the transmission paths of the second path P2 and the third path P3. In addition, the third optical element 160A further includes two transmission areas 164, and the optical area 162 is connected between the two transmission areas 164. The two transmission areas 164 are, for example, light-transmitting glass configured to allow light beams to pass through. Specifically, the extension lengths of the two transmission areas 164 may be compared with the extension length of the first optical element 140. For example, in this embodiment, a coverage area of the third optical element 160A extended by the two transmission areas 164 is the same as a coverage area of the first optical element 140. Therefore, all the light beams transmitted along the first path P1 to the fourth path P4 may pass through the third optical element 160A. In this way, beam deflection caused by light beams incident to the edge of the optical area 162 may be avoided, thereby reducing brightness loss and improving brightness of the illumination system 100A.

Specifically, in this embodiment, the first red beam R1 provided by the first light source module 110 is transmitted from the first red laser diode 112 along the first path P1, passes through the first optical element 140 and the transmission area 164 of the third optical element 160A, and reaches the condensing element 170. The second red beam R2 is transmitted from the second red laser diode 114 along the second path P2, passes through the first optical element 140 and the optical area 162 of the third optical element 160A, and reaches the condensing element 170. The third red beam R3 is transmitted from the third red laser diode 116 along the third path P3, passes through the first optical element 140, the second optical element 150, and the optical area 162 of the third optical element 160A, and reaches the condensing element 170. The fourth red beam R4 is transmitted from the fourth red laser diode 118 along the fourth path P4, passes through the first optical element 140, the second optical element 150, and the transmission area 164 of the third optical element 160A, and reaches the condensing element 170.

In addition, the first blue beam B1 provided by the second light source module 120 is transmitted from the first blue laser diode 122 to the first optical element 140, and is reflected by the first optical element 140 along the third path P3 to the second optical element 150. The first blue beam B1 is divided by the second optical element 150 into a first portion B11 and a second portion B12. The first portion B11 passes through the optical area 162 of the third optical element 160A along the third path P3 and is transmitted to the condensing element 170. The second portion B12 is transmitted to the first optical element 140, reflected by the first optical element 140 along the first path P1, passes through the transmission area 164 of the third optical element 160A, and is transmitted to the condensing element 170. The second blue beam B2 provided by the second light source module 120 is transmitted from the second blue laser diode 124 to the second optical element 150, and is divided by the second optical element 150 into a first portion B21 and a second portion B22. The first portion B21 passes through the transmission area 164 of the third optical element 160A along the fourth path P4 and is transmitted to the condensing element 170. The second portion B22 is transmitted to the first optical element 140, reflected by the first optical element 140 along the second path P2, passes through the optical area 162 of the third optical element 160A, and is transmitted to the condensing element 170. The first green beam G1 provided by the second light source module 120 passes through the second optical element 150 from the first green laser diode 126 and is transmitted to the first optical element 140. The first green beam G1 is reflected by the first optical element 140 along the fourth path P4, passes through the transmission area 164 of the third optical element 160A, and is transmitted to the condensing element 170. The second green beam G2 provided by the second light source module 120 is transmitted from the second green laser diode 128 to the first optical element 140, reflected by the first optical element 140 along the fourth path P4, passes through the second optical element 150 and the transmission area 164 of the third optical element 160A, and is transmitted to the condensing element 170.

In addition, the third green beam G3 provided by the third light source module 130 is transmitted from the first green laser diode 132 to the optical area 162 of the third optical element 160A, and is reflected by the optical area 162 along the third path P3 to the condensing element 170. The fourth green beam G4 provided by the third light source module 130 is transmitted from the second green laser diode 134 to the optical area 162 of the third optical element 160A, and is reflected along the second path P2 to the condensing element 170. In this way, brightness of the illumination system 100 may be further improved, and each of the first path P1 to the fourth path P4 may carry the red, blue, and green light, providing the uniform red, blue, and green illumination beams.

Based on the above, in the illumination system and the projection device of the present disclosure, the first light source module provides only the first color beam, the second light source module provides only the second color beam and the third color beam, and the third light source module provides the third color beam. The first color beam, the second color beam, and the third color beam are respectively and evenly transmitted to different positions along different paths through the configuration of the first light source module, the second light source module, the third light source module, the first optical element, the second optical element, and the third optical element. As a result, light spots formed by the first color beam, the second color beam, and the third color beam may be symmetrically and evenly distributed. In addition, by adding the third light source module to provide additional third color beams, brightness of the illumination system may be further improved, and each of the first path to the fourth path may include the red, blue, and green light, thereby providing uniform red, blue, and green illumination beams.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. An illumination system (100) wherein the illumination system (100) provides an illumination beam (LB) and comprises a first light source module (110), a second light source module (120), a third light source module (130), a first optical element (140), a second optical element (150), and a third optical element (160), wherein:
the first light source module (110) provides only a first color beam (C1);
the second light source module (120) provides only a second color beam (C2) and a third color beam (C3);
the third light source module (130) provides the third color beam (C3);
the first optical element (140), the second optical element (150), and the third optical element (160) are all disposed on the transmission paths of the first color beam (C1), the second color beam (C2), and the third color beam (C3), and the first light source module (110) and the second light source module (120) are respectively located on opposite sides of the first optical element (140) and the second optical element (150), and the second optical element (150) is disposed between the first optical element (110) and the third optical element (160).

2. The illumination system according to claim 1, wherein an extending direction of a substrate of the first light source module (110) is perpendicular to an extending direction of a substrate of the second light source module (120), and the extending direction of the substrate of the second light source module (120) is parallel to an extending direction of a substrate of the third light source module (130).

3. The illumination system according to claim 1 or 2, wherein the first light source module (110) comprises at least one first red laser diode (112), at least one second red laser diode (114), at least one third red laser diode (116), and at least one fourth red laser diode (118) arranged linearly; the second light source module (120) comprises at least one first blue laser diode (122), at least one second blue laser diode (124), at least one first green laser diode (126), and at least one second green laser diode (128) arranged linearly; and the third light source module (130) comprises at least one first green laser diode (132) and at least one second green laser diode (134) arranged linearly.

4. The illumination system according to any one of the preceding claims, wherein the first optical element (140), the second optical element (150), and the third optical element (160) are configured to allow the first color beam (C1) to pass through or the first optical element (140) is configured to allow the first color beam (C1) to pass through and to reflect the second color beam (C2), and / or to reflect the third color beam (C3).

5. The illumination system according to any one of the preceding claims, wherein the second optical element (150) is configured to allow the first color beam (C1) to pass through, to reflect a portion of the second color beam (C2) and allow another portion of the second color beam (C2) to pass through, and to reflect the third color beam (C3).

6. The illumination system according to any one of the preceding claims, wherein the second optical element (140) is configured to allow the first color beam (C1) to pass through, to reflect a portion of the second color beam (C2) and allow another portion of the second color beam (C2) to pass through, and to allow the third color beam (C3) to pass through.

7. The illumination system according to any one of the preceding claims, wherein the third optical element (160) comprises an optical region configured to allow the first color beam (C1) and the second color beam (C2) to pass through, and to reflect the third color beam (C3).

8. The illumination system according to claim 7, wherein the third optical element (160) further comprises two transmission regions, and the optical region is connected between the two transmission regions, the two transmission regions being configured to allow light beams to pass through.

9. The illumination system according to any one of the preceding claims, wherein the illumination system (100) further comprises a condensing element (170) disposed on the transmission paths of the first color beam (C1), the second color beam (C2), and the third color beam (C3), and the third optical element (160) is located between the condensing element (170) and the second optical element (150); wherein the first color beam (C1), the second color beam (C2), and the third color beam (C3) form a plurality of light spots on the condensing element (170), and the plurality of light spots are symmetrical about a center of the condensing element (170).

10. The illumination system according to claim 9, wherein the first color beam (C1) provided by the first light source module (110) comprises a first red beam (R1), a second red beam (R2), a third red beam (R3), and a fourth red beam (R4), the first red beam (R1) is transmitted to the first optical element (140) and the condensing element (170) along a first path (P1), the second red beam (R2) is transmitted to the first optical element (140), the third optical element (160), and the condensing element (170) along a second path (P2), the third red beam (R3) is transmitted to the first optical element (140), the second optical element (150), and the condensing element (170) along a third path (P3), and the fourth red beam (R4) is transmitted to the first optical element (140), the second optical element (150), and the condensing element (170) along a fourth path (P4).

11. The illumination system according to claim 10, wherein the second color beam (C2) provided by the second light source module (120) comprises a first blue beam (B1) and a second blue beam (B2), the first blue beam (B1) is transmitted to the first optical element (140), and is reflected by the first optical element (140) along the third path (P3) to the second optical element (150), where it is divided by the second optical element (150) into a first portion (B11) and a second portion (B12); the first portion (B11) of the first blue beam (B1) is transmitted along the third path (P3) to the condensing element (170), and the second portion (B12) of the first blue beam (B1) is transmitted to the first optical element (140), reflected by the first optical element (140) along the first path (P1) to the third optical element (160) and the condensing element (170); the second blue beam (B2) is transmitted to the first optical element (140), and is reflected by the first optical element (140) along the fourth path (P4) to the second optical element (150), and divided by the second optical element (150) into a first portion (B21) and a second portion (B22); the first portion (B21) of the second blue beam (B2) is transmitted along the fourth path (P4) to the condensing element (170), and the second portion (B22) of the second blue beam (B2) is transmitted to the first optical element (140), reflected by the first optical element (140) along the second path (P2) to the third optical element (160) and the condensing element (170); the third color beam (C3) provided by the second light source module (120) comprises a first green beam (G1) and a second green beam (G2), the first green beam (G1) is transmitted to the second optical element (150) and reflected by the second optical element (150) along the third path (P3) to the condensing element (170), the second green beam (G2) is transmitted to the second optical element (150) and reflected by the second optical element (150) along the fourth path (P4) to the condensing element (170); the third color beam (C3) provided by the third light source module (130) comprises a third green (G3) beam and a fourth green beam (G4), the third green beam (G3) is transmitted to the third optical element (160) and reflected by the third optical element (160) along the second path (P2) to the condensing element (170), and the fourth green beam (G4) is transmitted to the third optical element (160) and reflected by the third optical element (160) along the first path (P1) to the condensing element (170).

12. The illumination system according to claim 10, wherein the second color beam (C2) provided by the second light source module (120) comprises a first blue beam (B1) and a second blue beam (B2), the first blue beam (B1) is transmitted to the first optical element (140), reflected by the first optical element (110) along the third path (P3) to the second optical element (150), and divided into a first portion (B11) and a second portion (B12) by the second optical element (150); the first portion (B11) of the first blue beam (B1) is transmitted along the third path (P3) to the third optical element (160) and the condensing element (170), the second portion (B12) of the first blue beam (B1) is transmitted to the first optical element (140) and is reflected by the first optical element (140) along the first path (P1) to the condensing element (170); the second blue beam (B2) is transmitted to the second optical element (150) and is divided by the second optical element (150) into a first portion (B21) and a second portion (B22), the first portion (B21) of the second blue beam (B22) is transmitted along the fourth path (P4) to the condensing element (170), the second portion (B22) of the second blue beam (B2) is transmitted to the first optical element (140) and is reflected by the first optical element (140) along the second path to the third optical element (160) and the condensing element (170); the third color beam (C3) provided by the second light source module (120) comprises a first green beam (G1) and a second green beam (G2), the first green beam (G1) passes through the second optical element (120) to the first optical element (110) and is reflected by the first optical element (140) along the first path (P1) to the condensing element (170), the second green beam (G2) is transmitted to the first optical element (140) and is reflected by the first optical element (140) along the fourth path (P4) to the second optical element (150) and the condensing element (170); the third color beam (C3) provided by the third light source module (130) comprises a third green beam (G3) and a fourth green beam (G4), the third green beam (G3) is transmitted to the third optical element (160) and is reflected by the third optical element (160) along the third path (P3) to the condensing element (170), and the fourth green beam (G4) is transmitted to the third optical element (160) and is reflected by the third optical element (160) along the second path (P2) to the condensing element (170).

13. The illumination system according to claim 11 or 12, wherein the first path (P1) to the fourth path (P4) are parallel to each other and do not overlap.

14. A projection device (10), comprising an illumination system (100) as claimed in any one of the preceding claims, a light valve (60), and a projection lens (70);
the light valve (60) is disposed on a transmission path of the illumination beam (LB) to convert the illumination beam (LB) into an image beam (LI); and
the projection lens (70) is disposed on a transmission path of the image beam (LI) to project the image beam (LI) out of the projection device (10).
